# EUROPÄISCHE PATENTSCHRIFT

(11) **EP 2 982 013 B1**
(45) Veröffentlichungstag und Bekanntmachung des Hinweises auf die Patenterteilung: **13.03.2019**
(21) Anmeldenummer: 14716266.3
(22) Anmeldetag: 03.04.2014
(51) Int. Cl.: H02B 1/20

(54) **SCHALTSCHRANKANORDNUNG MIT VERBUNDENEN SCHUTZBEREICHEN**
ELECTRICAL CABINET ARRANGEMENT WITH CONNECTED PROTECTED AREAS
DISPOSITIF D'ARMOIRE ÉLECTRIQUE AVEC ZONES PROTEGÉES CONNECTÉES

(30) Priorität: 05.04.2013 DE 102013103443
(43) Veröffentlichungstag der Anmeldung: 10.02.2016
(73) Patentinhaber: Eaton Intelligent Power Limited, Dublin 4 (IE)
(72) Erfinder: SCHERZER, Martin, A-3873 Brand (AT); WEIGL, Franz, A-3961 Waldenstein (AT); BERGER, Thomas, A-3910 Zwettl (AT)
(74) Vertreter: Eaton IP Group EMEA
(86) Internationale Anmeldenummer: PCT/EP2014/056666
(87) Internationale Veröffentlichungsnummer: WO 2014/161923

(56) Entgegenhaltungen:
- DE-A1- 4 210 657
- US-A- 3 967 165
- US-A1- 2006 063 434

## Beschreibung

### TECHNISCHES GEBIET

Die Erfindung betrifft einen Schaltschrank, umfassend einen Rahmen mit einer Trennebene, welche dazu vorbereitet ist, einen weiteren Rahmen daran anzureihen und einen innerhalb des Rahmens angeordneten von der Trennebene beabstandeten Schutzbereich, welcher mit Wänden begrenzt ist.

### STAND DER TECHNIK

Ein solcher Schaltschrank ist aus dem Stand der Technik grundsätzlich bekannt. Dabei ist der Schutzbereich für einen Nutzer zugänglich und beinhaltet beispielsweise Schaltelemente, Messinstrumente und dergleichen. Beispielsweise befindet sich der Schutzbereich hinter einer Tür des Schaltschranks.

Die US3967165 offenbart einen Schaltschrank mit einem Schutzbereich und eine hinter dem Schutzbereich verlaufende Kabelführung. Die im Schutzbereich angeordneten Bauelemente sind in der Regel schutzisoliert, sodass vom Schaltschrank für den Nutzer keine Gefahr ausgeht. Innerhalb des Schaltschranks, jedoch außerhalb des Schutzbereichs befinden sich in aller Regel auch nicht isolierte Bauelemente, beispielsweise eine gefährliche Spannung führende Stromschienen ("bus bars") und dergleichen. Da der Schutzbereich mit Hilfe von Wänden begrenzt ist, kann der Nutzer aber nicht unbeabsichtigt in den Stromkreis gelangen.
Bei komplexeren Anlagen werden oft mehrere Schaltschränke aneinandergereiht, um den erforderlichen Platz für die zu installierenden elektrischen oder elektronischen Geräte zur Verfügung zu stellen. In der Regel weist jeder Schaltschrank seinen eigenen in sich abgeschlossenen, beziehungsweise nur zur Zugangsseite offenen Schutzbereich auf. Durch die Aneinanderreihung der Schaltschränke entstehen somit mehrere von einander beabstandete Schutzbereiche.
Um die in den verschiedenen Schutzbereichen installierten Bauelemente elektrisch miteinander zu verbinden, werden Kabel zwischen den Schutzbereichen verlegt. Damit der Nutzer auch im Bereich der Kabel nicht in den ungeschützten Bereich gelangen kann, sind die genannten Kabel durch Kabeltüllen geführt. Insbesondere bei einer hohen Anzahl von Kabelverbindungen zwischen den Schutzbereichen, ergibt sich solcherart ein vergleichsweise hoher Montageaufwand.

### OFFENBARUNG DER ERFINDUNG

Eine Aufgabe der Erfindung ist es nun, einen verbesserten Schaltschrank anzugeben. Insbesondere soll der Aufwand für die Verkabelung zwischen den Schutzbereichen reduziert werden, ohne dass dadurch eine Gefährdung für den Nutzer entsteht.

Die Aufgabe der Erfindung wird mit einem Schaltschrank der eingangs genannten Art gelöst, wobei
- ein Kabelkanal vom Schutzbereich zur Trennebene geführt ist und
- der Kabelkanal im Bereich zwischen dem Schutzbereich und der Trennebene allseitig durch Wände begrenzt ist.

Die Aufgabe der Erfindung wird auch mit einer Anordnung mit zumindest zwei an einer Trennebene aneinandergereihten Schaltschränken der genannten Art gelöst.

Durch die genannten Maßnahmen kann die Verkabelung zwischen den Schutzbereichen relativ komfortabel erfolgen. Durch die zwischen Schutzbereichen angeordneten vollständig geschlossenen Kabelkanäle entsteht gleichsam ein großer zusammenhängender Schutzbereich. In der Trennebene selbst sind die Kabelkanäle daher normalerweise nicht verschlossen, obwohl dies in Ausnahmefällen vorgesehen sein kann.

Weitere vorteilhafte Ausgestaltungen und Weiterbildungen der Erfindung ergeben sich aus den Unteransprüchen sowie aus der Beschreibung in Zusammenschau mit den Figuren.

Günstig ist es,
- wenn der Rahmen eine zweite Trennebene aufweist, welche dazu vorbereitet ist, noch einen weiteren Rahmen an den erstgenannten Rahmen anzureihen, und
- wenn sich der Kabelkanal von der ersten Trennebene zur zweiten Trennebene erstreckt und dabei den Schutzbereich kreuzt.
Auf diese Weise ist es möglich, Schaltschränke an beiden Seiten aneinander zu reihen.

Günstig ist es weiterhin, wenn der Kabelkanal im Schutzbereich Öffnungen aufweist. Dadurch können beispielsweise Kabel zwischen den Schutzbereichen verlegt werden. Denkbar ist aber auch, dass der Kabelkanal in einem Schutzbereich keine Öffnungen aufweist. Dadurch können auch nicht benachbarte Schutzbereiche unter Ausklammerung eines Schutzbereichs, in dem der Kabelkanal keine Öffnungen aufweist, zu einem zusammenhängenden Schutzbereich verbunden werden.

Vorteilhaft ist es, wenn der Kabelkanal im Schutzbereich U-förmig ausgebildet ist. Dadurch können Kabel einfach in den Kabelkanal eingelegt werden.

Besonders vorteilhaft ist es, wenn der Kabelkanal einen U-förmigen Grundkörper umfasst, der im Bereich zwischen dem Schutzbereich und einer Trennebene mit einem Deckel verschlossen ist. Dadurch kann ein Schaltschrank besonders rationell hergestellt werden, indem beispielsweise zwei Trennebenen des Schaltschranks mit einem durchgehenden U-Profil verbunden werden, das im ungeschützten Bereich mit einem Deckel verschlossen ist.

Günstig ist es bei einer Anordnung von Schaltschränken, wenn die Kabelkanäle der Schaltschränke in der Trennebene dicht an dicht aneinander stoßen. Dadurch wird vermieden, dass der Benutzer des Schaltschranks im Bereich der Trennebene in den ungeschützten Bereich gelangt, sei es mit den Fingern oder mit einem Werkzeug.

Günstig ist es bei einer Anordnung von Schaltschränken weiterhin, wenn ein Spalt zwischen den Kabelkanälen der Schaltschränke in der Trennebene entsprechend einer Schutzart bis zu IP4x ausgeführt ist. Durch die Schutzart wird die Eignung elektrischer und elektronischer Geräte für den Betrieb unter bestimmten Umweltbedingungen angegeben. Dazu existiert ein IPxx-Code, dessen erste Ziffer den Eindringschutz gegen Fremdkörper und dessen zweite Ziffer den Eindringschutz gegen Wasser angibt. Steigende Ziffern bedeuten dabei jeweils erhöhten Schutz. Beispielsweise bedeutet die Schutzklasse IP2x, dass ein Eindringen von Fremdkörpern ab einem Durchmesser von 12,5 mm und damit Fingersicherheit gegeben ist. Vorteilhaft ist es weiterhin, wenn der Spalt kleiner ist als 2,5 mm (IP3x) und insbesondere kleiner als 1 mm (IP4x). Auf diese Weise wird erreicht, dass der Benutzer des Schaltschranks im Bereich der Trennebene auch nicht mit einem Werkzeug (z.B. mit einem Schraubendreher) oder einem Draht in den ungeschützten Bereich gelangen kann. Die Klassifizierung der Schutzart ist durch verschiedene Normen geregelt, beispielsweise durch die DIN EN 60529, DIN 40 050-9 und durch die ISO 20653. An dieser Stelle wird angemerkt, dass der Schutz gegen Wasser an der Schnittstelle der Kabelkanäle im Allgemeinen keine Rolle spielt, da die Kabelkanäle im Inneren des Schaltschrankgehäuses angeordnet sind und der Schutz gegen Wasser normalerweise durch das Gehäuse sichergestellt wird.

Günstig ist es bei einer Anordnung von Schaltschränken weiterhin, wenn diese eine im Bereich der Trennebene um die Kabelkanäle der Schaltschränke angeordnete Manschette umfasst. Dadurch wird ebenfalls vermieden, dass der Benutzer des Schaltschranks im Bereich der Trennebene mit den Fingern oder mit einem Werkzeug in den ungeschützten Bereich gelangt, auch wenn zwischen den Kabelkanälen eigentlich ein Spalt verbleibt.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Fig. 1: eine beispielhafte Anordnung mit zwei aneinandergereihten Schaltschränken mit Schutzbereichen, die über einen Kabelkanal miteinander verbunden sind;
- Fig. 2: die Schutzbereiche aus Fig. 1 im Detail in Schrägansicht;
- Fig. 3: einen Kabelkanal im Detail;
- Fig. 4: eine Anordnung mit zwei Schutzbereichen und einem zwischen den Kabelkanälen verbleibenden Spalt in Vorderansicht und
- Fig. 5: wie Fig. 4, nur mit einer Schutzmanschette um die Kabelkanäle im Bereich der Trennebene.

### DETAILIERTE BESCHREIBUNG DER ERFINDUNG

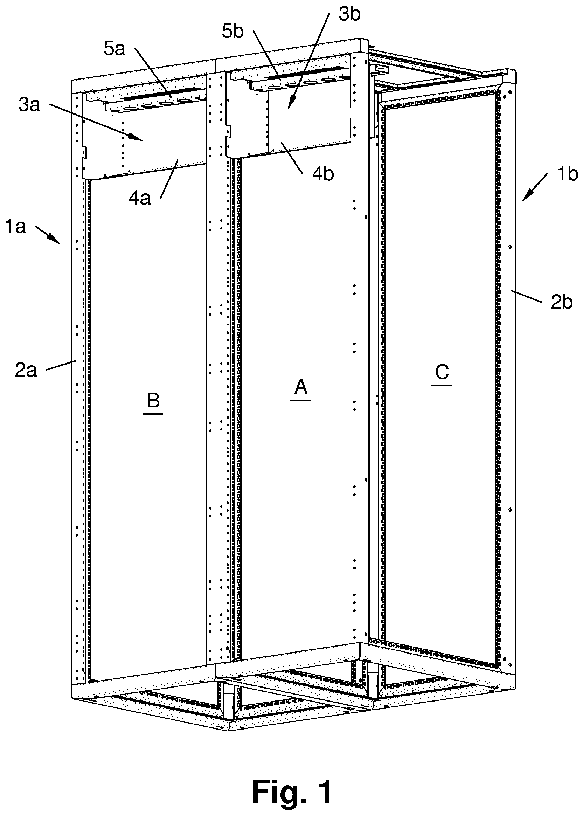

Die Fig. 1 zeigt eine Anordnung mit zwei Schaltschränken 1a, 1b, welche jeweils einen Rahmen 2a, 2b mit Trennebenen A, B C umfassen. Die Schaltschränke 1a, 1b sind dabei an einer Trennebene A aneinandergereiht. Neben dem Rahmen 2a, 2b umfasst ein Schaltschrank 1a, 1b jeweils auch einen innerhalb des Rahmens 2a, 2b angeordneten und von der Trennebene A, B C beabstandeten Schutzbereich 3a, 3b, welcher mit Wänden 4a, 4b begrenzt ist. Dazu je einen Kabelkanal 5a, 5b, welcher von einem Schutzbereich 4a, 4b zu einer Trennebene A, B C geführt ist und im Bereich zwischen dem Schutzbereich 4a, 4b und der Trennebene A, B C allseitig durch Wände begrenzt ist.

Im gezeigten Beispiel umfassen die Schaltschränke 1a, 1b respektive deren Rahmen 2a, 2b je zwei Trennebenen A, B C, welche für das Aneinanderreihen vorbereitet sind. Ein Kabelkanal 5a, 5b erstreckt sich dabei zwischen je zwei Trennebenen A, B C und kreuzt dabei je einen Schutzbereich 4a, 4b. Denkbar ist aber auch, dass die Kabelkanäle 5a, 5b nicht durchgehend sind, beziehungsweise auch, dass ein Schaltschrank 1a, 1b nur eine Trennebene A, B, C aufweist.

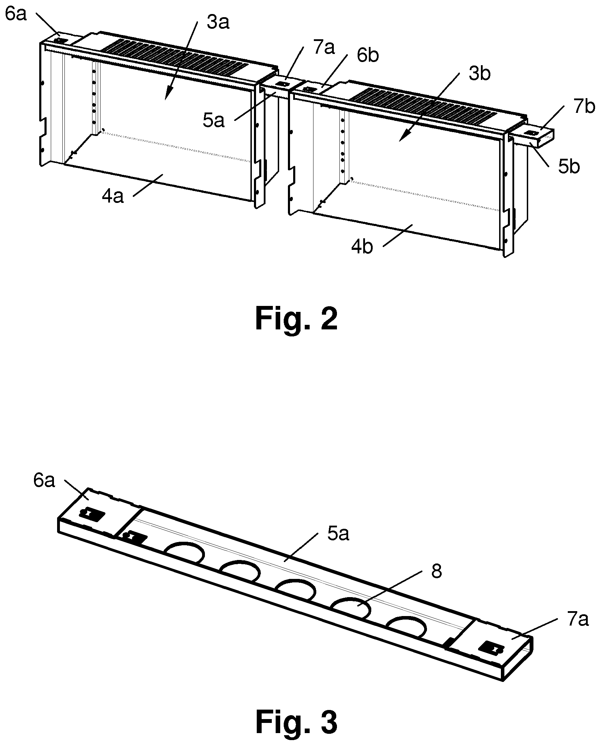

Fig. 2 zeigt die Schutzbereiche 3a, 3b und die Kabelkanäle 5a, 5b nun isoliert von den Rahmen 2a, 2b. Gut zu erkennen ist, dass die Kabelkanäle 5a, 5b der Schaltschränke 1a, 1b in der Trennebene A dicht an dicht aneinander stoßen. Dadurch wird vermieden, dass der Benutzer des Schaltschranks 1a, 1b im Bereich der Trennebene A in den ungeschützten Bereich gelangt, sei es mit den Fingern oder mit einem Werkzeug.

Fig. 2 zeigt auch, dass die Wände 4a, 4b der Schutzbereiche 3a und 3b in deren oberen Bereich Schlitze aufweisen. Dies können je nach geforderter Schutzart ausgebildet sein. Beispielsweise kann die Breite der Schlitze kleiner als 12,5 mm sein um die Schutzart IP2x und somit Fingerschutz zu gewährleisten. Analoge Überlegungen gelten auch für die Wände der Kabelkanäle, die im ungeschützten Bereich vorzugsweise durchgehend sind, aber auch Ausnehmungen aufweisen können. Diese können wiederum entsprechend einer gewählten Schutzart ausgeführt sein.

Die Fig. 3 zeigt den Kabelkanal 5a nun im Detail. Gut zu erkennen ist, dass der Kabelkanal 5a einen U-förmigen Grundkörper umfasst, der im Bereich zwischen dem Schutzbereich 3a und den Trennebenen A, B mit Deckeln 6a und 7a verschlossen ist. Im Schutzbereich 3a ist der Kabelkanal 5a also U-förmig ausgebildet. Um die Verkabelung zu erleichtern weist der Kabelkanal 5a im Schutzbereich 3a auch zusätzliche Öffnungen 8 auf.

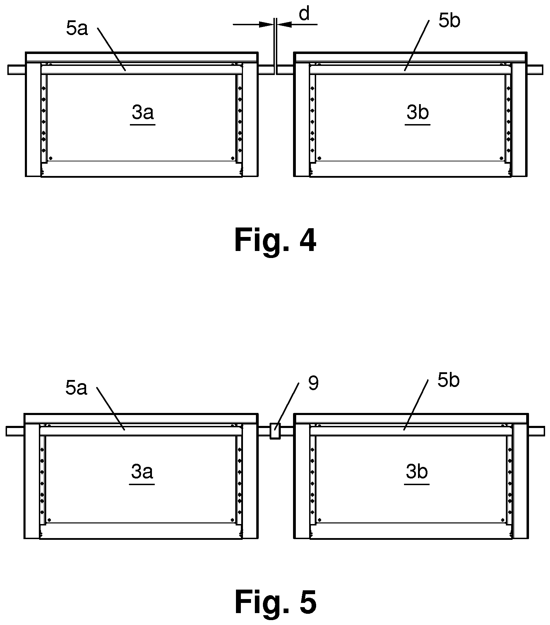

Fig. 4 zeigt eine Anordnung mit zwei Schutzbereichen 3a und 3b, bei denen in der Trennebene A zwischen den Kabelkanälen 5a, 5b ein Spalt d verbleibt in Vorderansicht. Ist dieser kleiner als 12,5 mm (IP2x), so wird vermieden, dass der Benutzer des Schaltschranks 1a, 1b im Bereich der Trennebene A mit seinen Fingern in den ungeschützten Bereich gelangt. Ist er kleiner ist als 2,5 mm (IP3x) und insbesondere kleiner als 1 mm (IP4x) kann der Benutzer im Bereich der Trennebene A auch nicht mit einem Werkzeug (z.B. mit einem Schraubendreher oder einem Draht) in den ungeschützten Bereich gelangen.

Günstig ist weiterhin, wenn im Bereich der Trennebene A um die Kabelkanäle 5a, 5b eine optionale Manschette 9 angeordnet ist, so wie dies in Fig. 5 dargestellt ist. Dadurch wird ebenfalls vermieden, dass der Benutzer des Schaltschranks 1a, 1b im Bereich der Trennebene A mit den Fingern oder mit einem Werkzeug in den ungeschützten Bereich gelangt, auch wenn zwischen den Kabelkanälen 5a, 5b eigentlich ein Spalt d verbleibt.

Abschließend wird angemerkt, dass die in den Figuren dargestellten Anordnungen nicht notwendigerweise maßstäblich dargestellt sind und daher auch andere Proportionen aufweisen kann. Weiterhin kann die Anordnung 1 auch mehr oder weniger Bauteile als dargestellt umfassen. Lageangaben (z.B. "oben", "unten", "links", "rechts", etc.) sind auf die jeweils beschriebene Figur bezogen und sind bei einer Lageänderung sinngemäß an die neue Lage anzupassen. Schließlich wird angemerkt, dass sich die obigen Ausgestaltungen und Weiterbildungen der Erfindung auf beliebige Art und Weise kombinieren lassen.

## Patentansprüche

1. Schaltschrank (1a), umfassend
- einen Rahmen (2a) mit einer Trennebene (A), welche dazu vorbereitet ist, einen weiteren Rahmen (2b) eines zweiten Schaltschrankes daran anzureihen und
- einen innerhalb des Rahmens (2a) angeordneten von der Trennebene (A) beabstandeten Schutzbereich (3a), welcher mit Wänden (4a) begrenzt ist,
**dadurch gekennzeichnet, dass**
- ein Kabelkanal (5a) vom Schutzbereich (3a) zur Trennebene (A) geführt ist und
- der Kabelkanal (5a) im Bereich zwischen dem Schutzbereich (3a) und der Trennebene (A) allseitig durch Wände begrenzt ist.

2. Schaltschrank (1a) nach Anspruch 1, **dadurch gekennzeichnet,**
- **dass** der Rahmen (2a) eine zweite Trennebene (B) aufweist, welche dazu vorbereitet ist, noch einen weiteren Rahmen an den erstgenannten Rahmen (2a) anzureihen, und
- **dass** sich der Kabelkanal (5a) von der ersten Trennebene (A) zur zweiten Trennebene (B) erstreckt und dabei den Schutzbereich (3a) kreuzt.

3. Schaltschrank (1a) nach Anspruch 1 oder 2, **dadurch gekennzeichnet, dass** der Kabelkanal (5a) im Schutzbereich (3a) Öffnungen (8) aufweist.

4. Schaltschrank (1a) nach einem der Ansprüche 1 bis 3, **dadurch gekennzeichnet, dass** der Kabelkanal (5a) im Schutzbereich (3a) U-förmig ausgebildet ist.

5. Schaltschrank (1a) nach einem der Ansprüche 1 bis 4, **dadurch gekennzeichnet, dass** der Kabelkanal (5a) einen U-förmigen Grundkörper umfasst, der im Bereich zwischen dem Schutzbereich (3a) und einer Trennebene (A, B) mit einem Deckel (6a, 7a) verschlossen ist.

6. Anordnung mit zumindest zwei an einer Trennebene (A) aneinandergereihten Schaltschränken (1a, 1b), **dadurch gekennzeichnet, dass** die Schaltschränke (1a, 1b) nach einem der Ansprüche 1 bis 5 ausgebildet sind.

7. Anordnung nach Anspruch 6, **dadurch gekennzeichnet, dass** die Kabelkanäle (5a, 5b) der Schaltschränke (1a, 1b) in der Trennebene (A) dicht an dicht aneinander stoßen.

8. Anordnung nach Anspruch 6, **dadurch gekennzeichnet, dass** ein Spalt (d) zwischen den Kabelkanälen (5a, 5b) der Schaltschränke (1a, 1b) in der Trennebene (A) entsprechend einer Schutzart bis zu IP4x ausgeführt ist.

9. Anordnung nach einem der Ansprüche 6 bis 8, **gekennzeichnet durch** eine im Bereich der Trennebene (A) um die Kabelkanäle (5a, 5b) der Schaltschränke (1a, 1b) angeordnete Manschette (9).

## Claims

1. Electrical cabinet (1a), comprising
- a frame (2a) with a parting plane (A), which is prepared to connect a further frame (2b) of a second electrical cabinet thereto and
- a protection area (3a) arranged within the frame (2a), which is spaced apart from the parting plane (A), which protection area is delimited by walls (4a),
**characterised in that**
- a guiding cable duct (5a) is formed from said protection area (3a) to said parting plane (A) and
- the cable duct is delimited in the area between the protection area (3a) and the parting plane (A) on all sides by walls.

2. Electrical cabinet (1a) according to claim 1, **characterised in**
- **that** the frame (2a) has a second parting plane (B), which is prepared to connect yet another frame to the first-mentioned frame (2a), and
- **that** the cable duct (5a) extends from the first parting plane (A) to the second parting plane (B) and thereby crosses the protection area (3a).

3. Electrical cabinet (1a) according to claim 1 or 2, **characterised in that** the cable duct (5a) has openings (8) in the protection area (3a).

4. Electrical cabinet (1a) according to any one of claims 1 to 3, **characterised in that** the cable duct (5a) is U-shaped in the protection area (3a).

5. Electrical cabinet (1a) according to any one of claims 1 to 4, **characterised in that** the cable duct (5a) comprises a U-shaped base body, which is closed with a cover (6a, 7a) in the area between the protection area (3a) and a parting plane (A, B).

6. Arrangement with at least two electrical cabinets (1a, 1b) connected together at a parting plane (A), **characterised in that** the electrical cabinets (1a, 1b) are designed according to any one of claims 1 to 5.

7. Arrangement according to claim 6, **characterised in that** the cable ducts (5a, 5b) of the electrical cabinets (1a, 1b) abut side by side against each other in the parting plane (A).

8. Arrangement according to claim 6, **characterised in that** a gap (d) between the cable ducts (5a, 5b) of the electrical cabinets (1a, 1b) is constructed in the parting plane (A) corresponding to a protection degree up to IP4x.

9. Arrangement according to any one of claims 6 to 8, **characterised by** a sleeve (9) arranged in the area of the parting plane (A) around the cable ducts (5a, 5b) of the electrical cabinets (1a, 1b).

## Revendications

1. Armoire électrique (1a), comprenant
- un cadre (2a) avec un plan de séparation (A), lequel est préparé pour juxtaposer à celui-ci un autre cadre (2b) d'une seconde armoire électrique et
- une zone de protection (3a) disposée à l'intérieur du cadre (2a), tenue à distance du plan de séparation (A), laquelle est délimitée par des parois (4a),
**caractérisée en ce que**
- un canal de câble (5a) guide est formé de la zone de protection (3a) au plan de séparation (A), et
- le canal de câble (5a) est délimité de toutes parts par des parois dans la zone entre la zone de protection (3a) et le plan de séparation (A).

2. Armoire électrique (1a) selon la revendication 1, **caractérisée en ce**
- **que** le cadre (2a) présente un second plan de séparation (B), lequel est préparé pour juxtaposer au cadre (2a) évoqué en premier encore un autre cadre, et
- **que** le canal de câble (5a) s'étend du premier plan de séparation (A) au second plan de séparation (B) et croise ainsi la zone de protection (3a).

3. Armoire électrique (1a) selon la revendication 1 ou 2, **caractérisée en ce que** le canal de câble (5a) présente dans la zone de protection (3a) des ouvertures (8).

4. Armoire électrique (1a) selon l'une quelconque des revendications 1 à 3, **caractérisée en ce que** le canal de câble (5a) est réalisé en forme de U dans la zone de protection (3a).

5. Armoire électrique (1a) selon l'une quelconque des revendications 1 à 4, **caractérisée en ce que** le canal de câble (5a) comprend un corps de base en forme de U, qui est fermé par un couvercle (6a, 7a) dans la zone entre la zone de protection (3a) et un plan de séparation (A, B).

6. Ensemble avec au moins deux armoires électriques (1a, 1b) juxtaposées les unes aux autres au niveau d'un plan de séparation (A), **caractérisé en ce que** les armoires électriques (1a, 1b) sont réalisées selon l'une quelconque des revendications 1 à 5.

7. Ensemble selon la revendication 6, **caractérisé en ce que** les canaux de câble (5a, 5b) des armoires électriques (1a, 1b) sont mis bout à bout dans le plan de séparation (A).

8. Ensemble selon la revendication 6, **caractérisé en ce qu'**une fente (d) entre les canaux de câble (5a, 5b) des armoires électriques (1a, 1b) est prévue dans le plan de séparation (A) conformément à un type de protection jusqu'à IP4x.

9. Ensemble selon l'une quelconque des revendications 6 à 8, **caractérisé par** une manchette (9) disposée dans la zone du plan de séparation (A) autour des canaux de câble (5a, 5b) des armoires électriques (1a, 1b).
